# EUROPEAN PATENT SPECIFICATION

(11) **EP 1 240 033 B1**
(45) Date of publication and mention of the grant of the patent: **04.10.2006**
(21) Application number: 99974269.5
(22) Date of filing: 18.10.1999
(51) Int. Cl.: B60C 15/024, B29D 30/06

(54) **TIRE WITH ROUNDED BEAD TOE AND A MOLD FOR FORMING THE TIRE**
REIFEN MIT ABGERUNDETER WULSTZEHE UND FORM ZUM FORMEN VON DEM REIFEN
PNEU A POINTE DE BOURRELET ARRONDIE ET MOULE DESTINE A FORMER CE PNEU

(43) Date of publication of application: 18.09.2002
(73) Proprietor: MICHELIN RECHERCHE ET TECHNIQUE S.A., 1763 Granges-Paccot (CH)
(72) Inventor: BUMPAS, Kenneth, Knox, Jr., Easley, SC 29642 (US); GALLEGO, Juan-Pablo, Simpsonville, SC 29680 (US)
(74) Representative: Le Cam, Stéphane Georges Elie
(86) International application number: PCT/US1999/024447
(87) International publication number: WO 2002/032697

(56) References cited:
- EP-A- 0 531 007
- EP-A- 0 652 120
- GB-A- 1 542 133
- US-A- 3 171 162
- US-A- 4 057 091
- PATENT ABSTRACTS OF JAPAN vol. 014, no. 083 (M-0936), 16 February 1990 (1990-02-16) & JP 01 297310 A (OHTSU TIRE & RUBBER CO LTD:THE), 30 November 1989 (1989-11-30)

## Description

### BACKGROUND AND SUMMARY OF THE INVENTION

The invention relates to a tire for heavy load carrying vehicles, for example, trucks and buses. More particularly, the invention relates to a heavy load tire having a bead toe shaped for improved durability to survive dismounting and remounting during the service life of the tire. The invention also relates to a mold for forming the tire.

The tire bead is the portion of the tire that engages the rim. The bead typically includes a flattened surface defining a section of a cone that mates with the seat of the rim to transfer the forces of the bead core or cable to secure the tire to the rim. The bead seat surface also forms an airtight seal to retain pressurized air in the tire. In conventional truck and bus tires, the bead terminates in a triangular-shaped bead toe extending from the bead coil or bead core toward the axis of rotation of the tire.

Truck and bus tires using a 15° drop center rim typically have an elongated bead toe, which is believed to help secure the bead to the rim seat and help resist forces during use that would dismount the bead. In addition, the elongated bead toe is believed to help ensure the integrity of the airtight seal. An elongated bead toe, however, can interfere with mounting and dismounting the tire on a rim, which actions involve forcing the bead toe over the outer flange of the rim.

Truck and bus tires are designed and manufactured with heavy duty carcasses capable of a useful life far exceeding the life of the tread. Vehicle operators commonly retread such tires to obtain the optimum value from the carcass. A long haul truck tire, for example, may be retreaded three or four times, which requires a similar number of dismounting and remounting steps.

In addition, a tire may be dismounted during its life to perform repairs to the carcass from road hazard damage.

A problem with mounting and dismounting a tire is that forcing the bead over the rim flange puts a great deal of stress on the bead and bead toe. As a tire ages and the rubber becomes brittle from oxidation, the stresses can damage the bead toe. If severe, this damage can shorten or end the useful life of the carcass.

The invention provides a solution in a novel shape for the bead portion that eliminates a large portion of the bead toe in comparison to conventional tires, without sacrificing the mounting integrity of the tire bead.

According to the invention, a tire for mounting on a rim having an approximately 15° bead seat, that is, a truck or bus tire, has a bead toe that is truncated and rounded in comparison to a conventional bead toe. The bead toe in accordance with the invention is defined by a seat face and an inner surface of the bead portion defining an included angle in a range of 105° to 150°. More preferably, the included angle is in a range of 130° to 150°.

According to another aspect of the invention, the seat face of the bead terminates in a transition point that is located, with respect to the equatorial plane of the tire, not less than 0.78 times the axial distance of the seat point from the equatorial plane when the seat point is positioned as when mounted on an appropriate rim.

According to yet another aspect of the invention, the transition point is located with respect to the center of rotation of the tire a radial distance in a range of 0.95 times the radial distance of the seat point from the center of rotation to 0.97 times the radial distance of the seat point from the center of rotation with the seat point located as when mounted on a rim.

A mold in accordance with the invention includes bead rings having conical ridges including a bead seat forming face and a membrane guide surface. The conical ridges guide the mold membrane from a radial disposition to bend toward the equatorial plane of the tire. The membrane extending from the conical ridge makes and angle with the bead seat forming face that is in a range of 105° to 155°, and preferably 130° to 150°, to form the rounded bead toe.

### BRIEF DESCRIPTION OF THE DRAWINGS

The invention will be better understood with reference to the following description in conjunction with the appended drawings, in which:
Figure 1 is a section view of a bead of a tire in accordance with the present invention;
Figure 2 is a section view of the tire bead of Figure 1 mounted on a rim;
Figure 3 is a section view of a conventional tire bead mounted on a rim; and,
Figure 4 is a section view of a portion of a mold in accordance with the invention.

### DETAILED DESCRIPTION

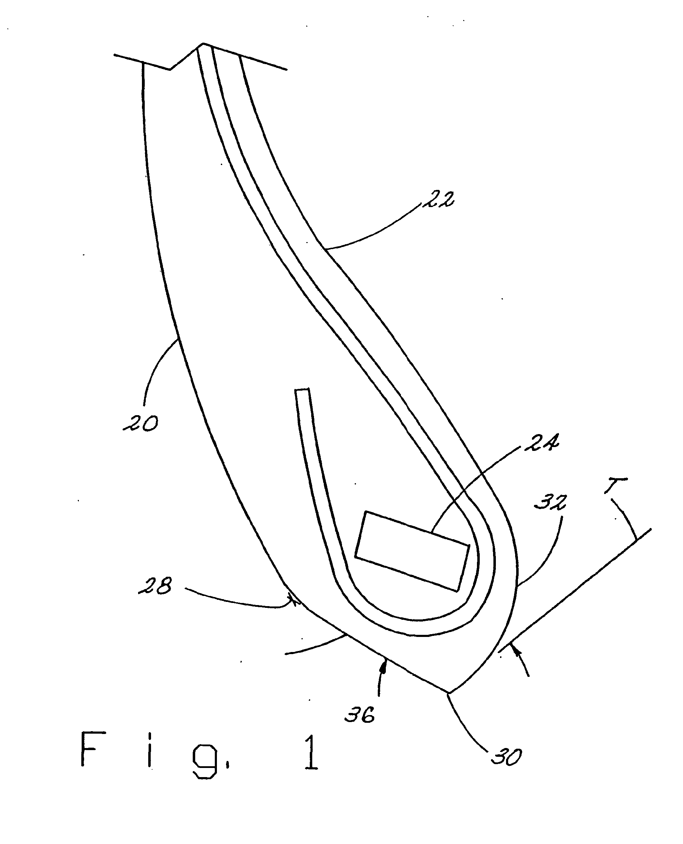

Figure 1 illustrates in section a bead portion of a heavy load tire, for example, a tire for a bus or truck. The outer surface 20 and inner surface 22 of the tire are indicated to provide reference orientation. The bead portion includes a bead core 24, which in the illustrated embodiment is formed as a rectangularly profiled coil of steel wires. As known in the art, other profiles may be used for the bead core, including oval and circular.

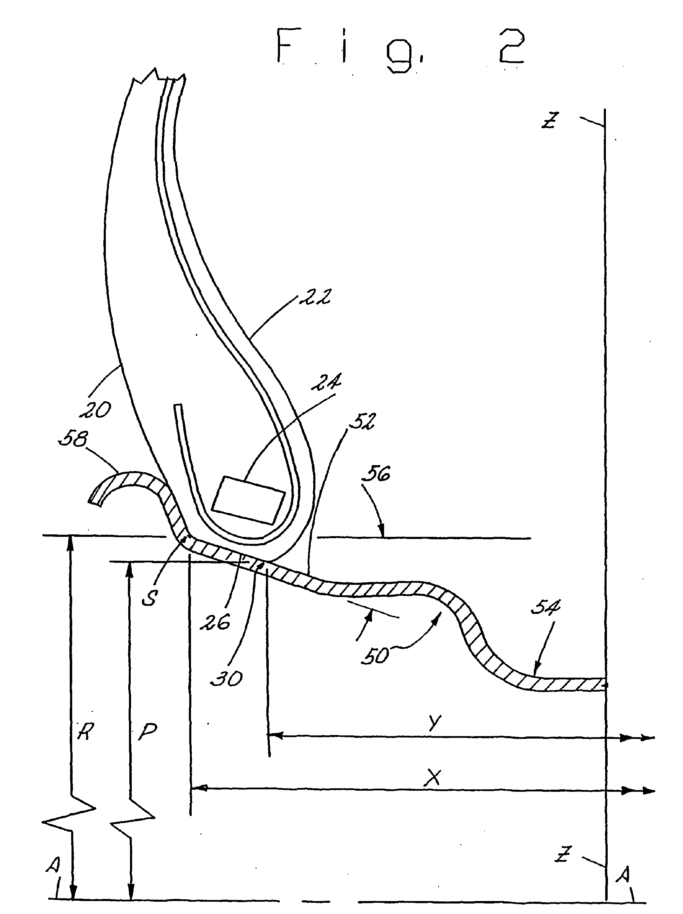

Referring now also to Figure 2, the bead portion mounts on a rim 50. Tension in the bead core 24 is transmitted to the rim by compression of the rubber between the bead core 24 and the rim seat 52 to secure the bead, and hence the tire, to the rim. The bead portion is shaped to have a seat face 26, a flattened region that engages the seat 52 of the rim 50. A reference seat point 28 near an outer end of the seat face 26 corresponds to a standardized reference point S on the rim. The Tire & Rim Association in its Yearbook publishes standard dimensions for rims, in which the reference point S locates a point on the rim at a nominal rim diameter and rim width. When the tire is properly mounted on a rim, the two points 28 and S substantially coincide. As shown in Figure 1, the seat point 28 is not actually located on the tire bead; however, this point is easily identified by those skilled in the art, and is commonly used in specifying the mounted diameter and width of a tire.

The section of rim 50 shown in Figure 2 indicates the radius R and half width X rather than the diameter and width. The rim seat 52 is formed as a frustoconical section with respect to the axis of rotation A-A of the rim. The seat 52 forms a seat angle 56 of 15° with respect to the axis of rotation A-A. A 15° seat angle is used for rims for heavy load vehicles such as trucks and buses.

The tire bead seat 26 ends at a tip 30 that represents a transition point where the end surface 32 of the bead curves away from the bead seat 26 to the inner surface 22 of the tire sidewall. As may be seen in Figure 1 and Figure 2, the end surface 32 has a rounded shape in making the transition from the bead seat 26 to the inner surface 22 of the tire.

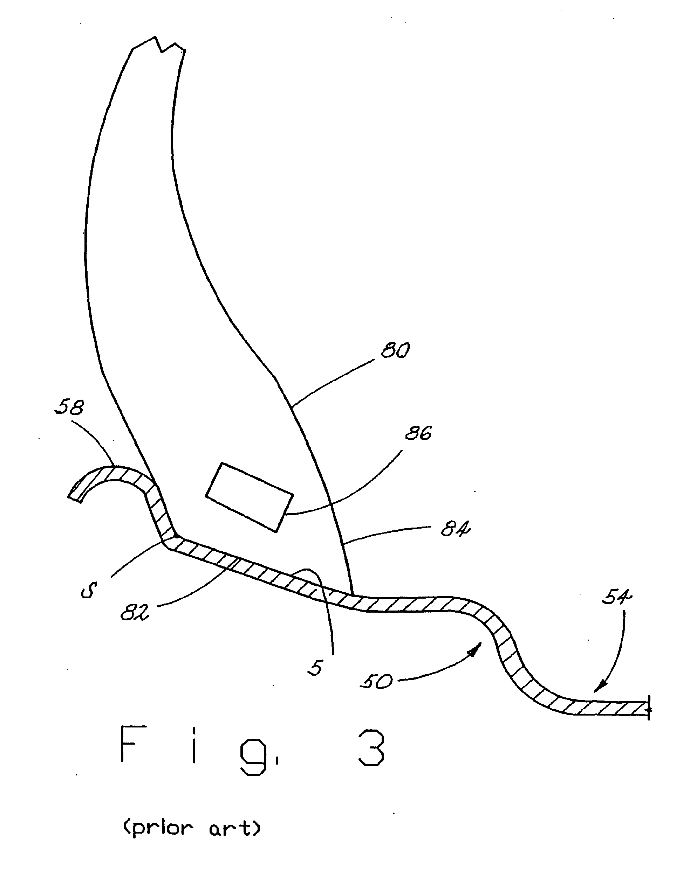

By comparison, Figure 3 shows a conventional bead 80 is illustrated mounted on a rim 50. The bead seat 82 of the conventional bead 80 is relatively longer and ends in a triangular shaped tip 84. Beads having this triangular tip, or bead toe, are common in the industry because it is believed that the elongated bead seat 82 ensures that a proper air-tight seal is formed. In addition, the longer bead seat 82 under the bead core 86 is believed to help stabilize the bead on the rim and help resist forces encountered when the vehicle is moving and turning and the wheels are rolling.

A problem with conventional beads 80 is related to mounting and dismounting the tire. As seen in Figure 3, the rim 50 includes a so-called drop center or well 54. During mounting, one side of the tire is passed over the rim flange 58 and positioned in the well 54. The other side of the tire is then passed over the rim flange 58. The tire is then inflated to seat the beads on the rim seats. When dismounting the tire, the opposite actions are performed.

Forcing the beads over the rim flanges require a tool that deforms the tire bead, by twisting, bending and stretching it, to create sufficient clearance. The elongated, triangular bead toe 84 is difficult to move over the rim flange 58, even with a tool. In addition, the action of the tool and the forces imparted on the bead in passing over the flange can damage the bead toe, particularly in older tires, in which the rubber has oxidized and become brittle. The less resilient rubber can be cracked or broken. A broken bead toe can expose the bead, or result in the loss of integrity of the bead seat, either rendering the tire unfit for service.

The inventors discovered that a tire bead could be securely seated and provide an air-tight seal with a rounded bead toe, thus eliminating the problems of the conventional bead toe. The short bead toe is easier to move over a rim flange, requiring less deformation, and therefore, is less subject to breaking. In addition, a bead in accordance with the invention requires less material and is thus, lighter in weight and less expensive to manufacture.

Returning, to Figure 1, a tire bead in accordance with the invention has a bead toe that includes a seat surface 26 ending in a transition point 30 and there joining an inner surface 32. An included angle 36 defined by the seat surface and a line T with origin at the transition point 30 and tangent to the inner surface 32 is in a range of 105° and 150°, inclusive. The included angle is measured in the direction that includes the bead toe. Preferably, the included angle 36 is in a range of 130° to 150°.

Referring to Figure 2, the bead toe of the invention is also defined by the location of the transition point 30 relative to the seat point 28 or rim seat point S. The line Z-Z represents the equatorial plane, that is, the center of the rim and center of a mounted tire along the axis of rotation A-A. The nominal radius R of the rim is measured from the axis of rotation A-A. The axial distance X of the seat point S is half the nominal width, and is measured from the center line Z-Z of the rim. The nominal width and diameter for a rim of a particular size are published by the Tire & Rim Association in the Yearbook.

The seat point S is defined for each standardized rim and the tires that fit on that rim, that is, the distances R and X can be calculated from standard data, and are useful as references. According to the invention, the transition point 30 is located relative to the rim seat point S when the tire is positioned with seat points 28 coinciding with point S as being at a radial distance P in a range of 0.95 R to 0.97 R. It is understood that the tire having two beads, for both seat points 28 to coincide with the reference rim seat points S, the tire would be positioned as if the tire were mounted on a rim. This may be accomplished by actually mounting the tire on an appropriate rim, or using a device that can establish the appropriate bead locations.

In addition, the transition point 30 is at an axial distance Y of at least 0.78 X. Preferably, the transition point 30 is axially inward of the center of the bead core 24. The transition point 30, of course, cannot be at an axial distance from the tire center greater than that of the seat point S or 28.

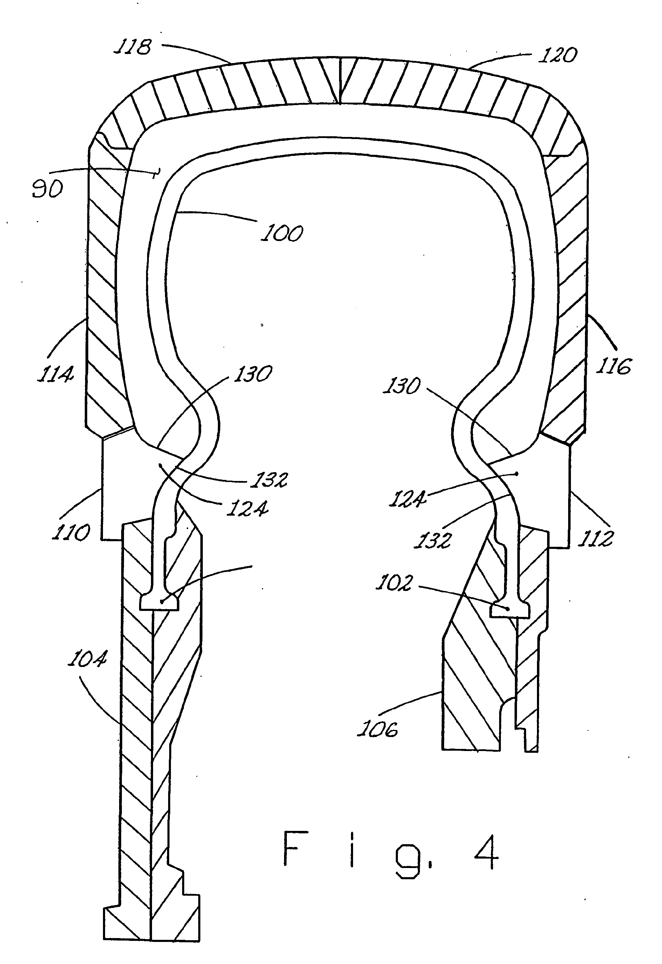

A tire in accordance with the invention can be manufactured using a mold specially adapted to form the bead toe. Figure 4 is a highly simplified, sectional representation of a mold in accordance with the invention. The mold includes a membrane 100 that is filled with a heated fluid for transmitting pressure and heat to the interior of the tire. The ends 102 of the membrane 100 are clamped in upper 104 and lower 106 membrane plates. Upper 110 and lower 112 bead rings, upper 114 and lower 116 sidewall plates, and tread rings 118, 120 are mounted in the mold to form the exterior of the tire. A tire being cured in the mold will reside in a space 90 defined between the membrane 100 and the bead rings, sidewall plates and tread rings.

The bead rings 110, 112 each include a conical ridge 124 defining a seat face 130 to shape the bead seat and a guide surface 132 to guide the membrane 100. The membrane 100 extends along the guide surface 132 around a point at the end of the seat face 130 to mold the bead toe of the tire. The point at the end of the seat face 130 corresponds to the transition point 30 of the tire bead toe (see Figures 1 and 2). The conical ridge 124 ensures that the transition point 30 of the tire bead is appropriately located. The guide surface 132 diverts the membrane 100 from a horizontal disposition at the clamped ends to bend toward the equatorial plane of the tire so that the seat face 130 and membrane 100 as it departs from the conical ridge 124 define an included angle in a range of 105° to 155°, and preferably, in a range of 130° to 150°. Accordingly, an included angle between the seat face 130 and the guide surface 132 is in a range of approximately 30° to 95°. Fluid pressure inside the membrane causes the membrane to curve around the tire bead and conform with the inner surface of the tire.

A mold in accordance with the invention provides a better cure of the bead toe by eliminating empty space in the mold. The rubber does not have to first flow into the space, and accordingly, molding pressure on and heat transfer to the bead is equalized early in the molding process.

The invention has been described in terms of preferred principles, embodiments, and structure. However, those skilled in the art will appreciate that the invention can be practiced without strict adherence to the described embodiments, and that variations and substitutions may be made without departing from the invention as defined in the following claims.

## Claims

1. In a tire for mounting on a rim having a conical seat of approximately 15°, said tire having two beads, one bead on each side of an equatorial plane, each bead having a substantially frustoconical shaped seat face (26) and an inner surface (32), the seat face and inner surface meeting at a transition point (30), **characterized by** the seat face and inner surface defining an included angle (36) about the transition point in a range of 105° to 155°.

2. In a tire according to claim 1, the included angle between the seat face and inner surface being in a range of 130° to 150°.

3. In a tire according to claim 1 or 2, the invention further comprising the transition point (30) being located at a radial distance (P) from a center of rotation of the tire that is 0.95 to 0.97 times a radial distance (R) of the seat point (S) from the center of rotation of the tire.

4. In a tire according to one of the claims 1 to 3, the invention further comprising the transition point (30) being located an axial distance (Y) from the equatorial plane that is at least 0.78 times and not greater than an axial distance (X) of the seat point (S) from the equatorial plane.

5. A mold for a heavy load tire, comprising:
a membrane (100) for mold forming an interior of a tire;
upper (104) and lower (106) membrane plates for clamping free ends of the membrane in a position parallel to an equatorial plane of the mold;
upper (110) and lower (112) bead rings mounted radially outward of the membrane plates for mold forming bead portions of the tire and for guiding the membrane from the membrane plates to the interior of the tire, each bead ring having a conical ridge (124) defining a seat forming surface (130) and a guide surface (132) meeting at a point, an included angle formed between the seat forming surface and an extension of the guide surface past the point is in a range of 105° to 155°.

## Patentansprüche

1. Reifen zum Montieren auf einer Felge, welche einen konischen Sitz von ungefähr 15° aufweist, wobei der Reifen zwei Wülste besitzt, ein Wulst auf jeder Seite einer Mittelebene, wobei jeder Wulst eine im Wesentlichen stumpfkegelig geformte Sitzfläche (26) und eine innere Fläche (32) aufweist, wobei sich die Sitzfläche und die innere Fläche an einem Übergangspunkt (30) treffen, **gekennzeichnet dadurch, dass** die Sitzfläche und die innere Fläche einen Öffnungswinkel (36) um den Übergangspunkt in einem Bereich von 105° bis 155° definieren.

2. Reifen nach Anspruch 1, wobei der Öffnungswinkel zwischen der Sitzfläche und der inneren Fläche in einem Bereich von 130° bis 150° liegt.

3. Reifen nach Anspruch 1 oder 2, wobei die Erfindung des Weiteren umfasst, dass der Übergangspunkt (30) in einem radialen Abstand (P) vom Rotationsmittelpunkt des Reifens angeordnet ist, der 0,95 bis 0,97 mal ein radialer Abstand (R) des Sitzpunktes (S) vom Rotationsmittelpunkt des Reifens ist.

4. Reifen nach einem der Ansprüche 1 bis 3, wobei die Erfindung des Weiteren umfasst, dass der Übergangspunkt (30) in einem axialen Abstand (Y) von der Mittelebene angeordnet ist, der wenigstens 0,78 mal und nicht größer als ein axialer Abstand (X) des Sitzpunktes (S) von der Mittelebene ist.

5. Gussform für einen Schwerlastkraftwagenreifen, umfassend:
eine Membran (100) für die Gussform, welche das innere eines Reifens bildet;
eine obere (104) und eine untere (106) Membranplatte zum Festklemmen freier Enden der Membran in einer Position parallel zu einer Mittelebene der Gussform;
einen oberen (110) und einen unteren (112) Wulstring, welche radial außerhalb der Membranplatten angebracht sind, für die Gussform ausbildende Wulstabschnitte des Reifens und zum Führen der Membran von den Membranplatten zum Inneren des Reifens, wobei jeder Wulstring einen konischen Grat (124) aufweist, der eine den Sitz ausbildende Fläche (130) und eine Führungsfläche (132) definiert, welche sich an einem Punkt treffen, wobei ein Öffnungswinkel, welcher zwischen der den Sitz ausbildenden Fläche und einer Verlängerung der Führungsfläche jenseits des Punktes ausgebildet ist, in einem Bereich von 105° bis 155° liegt.

## Revendications

1. Pneu destiné à être monté sur une jante pourvue d'un siège conique à environ 15°, ledit pneu possédant deux bourrelets, un bourrelet de chaque côté d'un plan équatorial, chaque bourrelet présentant une face d'appui (26) de forme sensiblement tronconique et une surface intérieure (32), la face d'appui et la surface intérieure se rejoignant en un point de transition (30), **caractérisé par le fait que** la face d'appui et la surface intérieure définissent un angle au sommet (36) autour du point de transition dans une plage de 105° à 155°.

2. Pneu selon la revendication 1, l'angle au sommet entre la face d'appui et la surface intérieure se situant dans une plage de 130° à 150°.

3. Pneu selon la revendication 1 ou 2, l'invention comportant en outre la localisation du point de transition (30) à une distance radiale (P) d'un centre de rotation du pneu valant 0,95 à 0,97 fois une distance radiale (R) du point d'appui (S) par rapport au centre de rotation du pneu.

4. Pneu selon l'une des revendications 1 à 3, l'invention comportant en outre la localisation du point de transition (30) à une distance axiale (Y) du plan équatorial valant au moins 0,78 fois, mais n'étant pas supérieure à, une distance axiale (X) du point d'appui (S) par rapport au plan équatorial.

5. Moule de pneu pour charges lourdes, comportant :
une membrane (100) destinée à former par moulage l'intérieur d'un pneu ;
des plaques à membrane supérieure (104) et inférieure (106) destinées à pincer les extrémités libres de la membrane dans une position parallèle à un plan équatorial du moule ;
des anneaux de bourrelet supérieur (110) et inférieur (112) montés radialement vers l'extérieur des plaques à membrane pour former par moulage les portions de bourrelets du pneu et pour guider la membrane des plaques à membrane vers l'intérieur du pneu, chaque anneau de bourrelet présentant une crête conique (124) définissant une surface formant siège (130) et une surface-guide (132) se rejoignant en un point, un angle au sommet formé entre la surface formant siège et un prolongement de la surface-guide au-delà du point se situant dans une plage de 105° à 155°.
